Europäisches Patentamt

European Patent Office

Office européen des brevets

(11) Veröffentlichungsnummer: **0 227 036 B1**

(12) **EUROPÄISCHE PATENTSCHRIFT**

(45) Veröffentlichungstag der Patentschrift: **19.06.91**

(51) Int. Cl.5: **G01L 1/20,** G01B 7/16, G01L 1/22, G01M 17/02

(21) Anmeldenummer: 86117611.3

(22) Anmeldetag: **17.12.86**

(54) **Messwertaufnehmer zur Erfassung hoher örtlicher Oberflächendehnungen.**

(30) Priorität: **19.12.85 DE 3544894**

(43) Veröffentlichungstag der Anmeldung:
**01.07.87 Patentblatt 87/27**

(45) Bekanntmachung des Hinweises auf die
Patenterteilung:
**19.06.91 Patentblatt 91/25**

(84) Benannte Vertragsstaaten:
**AT BE DE FR GB IT LU NL SE**

(56) Entgegenhaltungen:
**DE-B- 1 281 180**
**FR-A- 2 444 925**
**US-A- 2 518 906**
**US-A- 3 304 528**

(73) Patentinhaber: **FRAUNHOFER-GESELLSCHAFT
ZUR FÖRDERUNG DER ANGEWANDTEN FOR-
SCHUNG E.V.
Leonrodstrasse 54
W-8000 München 19(DE)**

(72) Erfinder: **Neugebauer, Jürgen, Dipl.-Ing.
Weyprechtstrasse 10
W-6100 Darmstadt(DE)**
Erfinder: **Hillen, Roland
Bessunger Strasse 74
W-6100 Darmstadt(DE)**
Erfinder: **Diefenbach, Walter
Eichendorffstrasse 36
W-6103 Griesheim(DE)**

(74) Vertreter: **Kraus, Walter, Dr. et al
Patentanwälte Kraus, Weisert & Partner
Thomas-Wimmer-Ring 15
W-8000 München 22(DE)**

## Beschreibung

Die Erfindung betrifft einen Meßwertaufnehmer zur Erfassung hoher örtlicher Oberflächendehnungen mit einem mit Quecksilber gefüllten Schlauch aus dehnbarem Material und mit den Schlauch an seinen beiden Enden verschließenden sowie mit den Enden der Quecksilbersäule elektrisch leitend verbundenen Anschlußdrähten, wobei der Schlauch schleifenförmig in einen hochelastischen Körper allseitig eingebettet ist.

Derartige Meßwertaufnehmer werden beispielsweise zur Messung des Verformungsverhaltens von Reifen während des Fahrbetriebes benötigt.

Aus dem Artikel "A New High Range Strain Gage" von J.A. Hurry und R.P. Woolley, der in "Rubber Age", Sept. 1953, Seite 799 erschienen ist, ist ein vor allem für Messungen an Reifen entwickelter Meßwertaufnehmer bekannt, der aus einem mit Quecksilber gefüllten Schlauch und in die Enden der Quecksilbersäule eintauchenden, den Schlauch verschließenden Anschlußdrähten aus Kupfer besteht. Zu seiner Herstellung wird zunächst ein dünner Stahldraht mit Rohgummi umgeben und in die gewünschte Form gebogen. Sodann wird der Gummi vulkanisiert und der Draht herausgezogen, so daß ein schlauchähnliches Gebilde entsteht. Das Innere dieses Schlauches wird mit Quecksilber gefüllt, in das durch die beiden Öffnungen des Schlauches eingeführte und diese verschließende Anschlußdrähte eintauchen.

Die Erfahrung hat gezeigt, daß dieser bekannte Meßwertaufnehmer nur für qualitative Studien einsetzbar ist, da herstellungsbedingt keine lineare Abhängigkeit des Widerstandes der Quecksilbersäule von der Dehnung des Aufnehmers besteht und seine Eichung sowie die Reproduzierbarkeit seiner Eigenschaften schwierig ist. Auch ist er für die Messung von Stauchungen kaum geeignet, da der das Quecksilber umgebende Körper ausknickt.

Weiterhin ist aus der US-PS 2 518 906 ein Meßwertaufnehmer der eingangs genannten Art bekannt, bei dem der schleifenförmig verlaufende Schlauch nicht nur allseitig, sondern auch vollständig in den hochelastischen Körper eingebettet ist, so daß mit diesem Meßwertaufnehmer keine genauen Meßwerte für eine bestimmte Dehnungsrichtung erhalten werden, weil sich sowohl in Dehnungsrichtung als auch quer zur Dehnungsrichtung verlaufende Schlauchteile im hochelastischen Körper befinden. Auch ist dieser Meßwertaufnehmer aus den gleichen Gründen wie der oben erwähnte bekannte Meßwertaufnehmer nicht für die Messung von Stauchungen geeignet.

Schließlich ist aus der DE-AS 12 81 180 ein Dehnungsmesser, insbesondere für große Dehnungen an flexiblen oder elastischen Körpern, bestehend aus einem mit einem Elektrolyten gefüllten Schlauch mit an den Enden desselben dicht schließend eingesetzten Elektroden bekannt. Bei diesem Dehnungsmesser wird der Schlauch aus zwei ineinandergeschobenen und dicht aneinanderliegenden Schläuchen aus elastomerem Material gebildet, wovon der innere Schlauch aus einem von dem Elektrolyten nicht angreifbaren Material besteht und mit der Lösungsflüssigkeit des Elektrolyten gesättigt ist, und der äußere Schlauch aus einem flüssigkeitsundurchlässigen Material besteht, das vom Elektrolyten angreifbar sein kann. Beispielsweise kann, wie in der DE-AS 12 81 180 angegeben ist, der innere Schlauch aus Silicongummi bestehen. Weiter hat dieser Dehnungsmesser, der mittels eines Klebers auch an einer Unterlage befestigt wird, freiliegende Anschlußenden. Ein solcher Dehnungsmesser hat jedoch einen relativ komplizierten und damit störungsanfälligen Aufbau.

Der Erfindung liegt die Aufgabe zugrunde, einen Meßwertaufnehmer für hohe örtliche Oberflächendehnungen zu schaffen, der wiederholt verwendbar ist und auch bei zahlreichen Messungen stets reproduzierbare Werte liefert, der ferner Stauchungen erfassen kann und der von Querdehnungen unbeeinflußte Signale bewirkt. Dabei ist auf eine einfache und damit kostengünstige Herstellbarkeit Wert zu legen, um beispielsweise die komplette Analyse der Oberflächendehnungen entlang den Konturen eines Reifens auf wirtschaftliche Weise zu ermöglichen.

Diese Aufgabe wird bei einem Meßwertaufnehmer der eingangs genannten Art erfindungsgemäß durch die folgenden Merkmale gelöst:

(a) Der Schlauch ist in einem vorgedehnten Zustand in dem hochelastischen Körper eingebettet,

(b) die gebogenen Abschnitte des Schlauches sowie seine Enden ragen aus dem Körper heraus, und

(c) die Anschlußdrähte weisen gegenüber dem Innendurchmesser des Schlauches ein Übermaß auf und sind an den im Schlauch befindlichen Enden verrundet.

Um eine Fertigung unter Einhaltung der Reproduzierbarkeit der Werte auch bei größeren Stückzahlen zu ermöglichen, ist gemäß einer Weiterbildung der Erfindung der den Schlauch umgebende Körper unter Verwendung einer Form um den vorgedehnten Schlauch herumgegossen.

Die mit der Erfindung erzielten Vorteile bestehen insbesondere darin,

(1) daß der Meßwertaufnehmer bei ausreichender Länge der Quecksilbersäule ein kompaktes Bauteil ist, das in stets gleichen Abmessungen in großer Stückzahl preiswert hergestellt werden kann,

(2) daß die Beziehungen zwischen Längenänderung und elektrischem Signal linear sind, so daß der Meßwertaufnehmer (in Reihenschaltung mit einem Festwiderstand) in Verbindung mit konventionellen Meßapparaturen für Dehnungsmeßstreifen verwendet werden kann,

(3) daß infolge der Vordehnung des Schlauches auch Stauchungen erfaßt werden können,

(4) daß infolge des Herausragens der gebogenen Abschnitte des Schlauches aus dem Körper die gemessenen Werte von Querdehnungen unbeeinflußt sind,

(5) daß der Abstand der Quecksilbersäule von der Auflagefläche des Körpers auf dem Meßobjekt reproduzierbar ist, und

(6) daß durch Diffusion oder auf andere Weise verlorengegangenes Quecksilber jederzeit auf einfache Weise ersetzt werden kann, da die herausragenden Schlauchenden frei zugänglich sind und die Anschlußdrähte durch bloßes Herausziehen entfernt werden können.

Versuche mit einem derartigen Meßwertaufnehmer haben außerdem ergeben, daß dessen Empfindlichkeit praktisch temperaturunabhängig ist.

Zusätzliche Weiterbildungen der Erfindung sind in den abhängigen Ansprüchen angegeben.

Ein Ausführungsbeispiel der Erfindung ist in der Zeichnung dargestellt und wird im folgenden näher beschrieben; es zeigen:

Figur 1    eine Ausführungsform eines erfindungsgemäßen Meßwertaufnehmers im Schnitt, und

Figur 2    den Meßwertaufnehmer der Figur 1 in der Draufsicht.

Mit 1 ist ein aus Silicon bestehender Schlauch bezeichnet, der in einen Körper 2 derart schleifenförmig eingebettet ist, daß seine gebogenen Abschnitte 3 sowie seine Enden 4 aus dem Körper 2 herausragen.

Der Körper 2 besteht vorzugsweise aus einem gießfähigen Silicon-Kautschuk, der unter Verwendung einer nicht dargestellten Form um den Schlauch 1 herumgegossen ist. Wesentlich ist es, für den Körper 2 ein solches Material zu wählen, das im Endzustand eine derart geringe Steifigkeit aufweist, daß durch die Übertragung der Oberflächendehnung des Meßobjekts auf den Schlauch 1 keine Beeinflussung des Meßsignals entsteht.

Vor dem Gießen wird der Schlauch 1 gedehnt und bis zum Ausvulkanisieren des Körpers 2 gedehnt gehalten. Das Ausmaß der Dehnung beträgt vorzugsweise 20 %, da in diesem Bereich etwaige Stauchungen des Meßobjekts auftreten können. Es ist aber auch möglich, im Bedarfsfall größere Dehnungen zu wählen.

Der Schlauch 1 ist mit Quecksilber 5 gefüllt und durch zwei Anschlußdrähte 6 verschlossen, die gegenüber dem Innendurchmesser des Schlauches 1 ein Übermaß aufweisen und mit dem Quecksilber 5 elektrischen Kontakt haben. Um ein Beschädigen des Schlauches 1 beim Einführen der Anschlußdrähte 6 zu vermeiden, sind diese an ihren Enden verrundet. Die Anschlußdrähte 6 können aus lackisoliertem Kupferdraht bestehen.

Die Erfahrung hat gezeigt, daß im Laufe der Zeit ein geringer Teil des Quecksilbers 5 durch Diffusion verlorengeht. Bei dem hier vorgeschlagenen Meßwertaufnehmer ist es in einfacher Weise möglich, den Verlust durch Nachfüllen auszugleichen. Hierzu ist es lediglich erforderlich, die Anschlußdrähte 6 herauszuziehen, eine entsprechende Menge Quecksilber 5 in den Schlauch 1 zu injizieren und die Anschlußdrähte 6 wieder hineinzustecken.

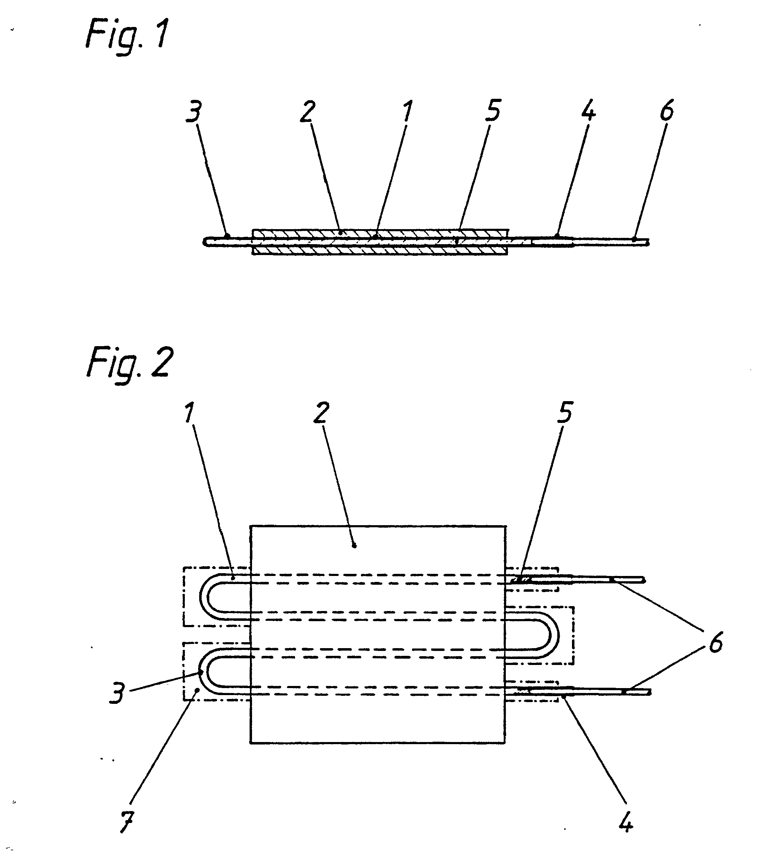

Um die aus dem Körper 2 herausragenden gebogenen Abschnitte 3 des Schlauches 1 vor Beschädigungen zu schützen, können diese, wie in Figur 2 durch strichpunktierte Linien dargestellt, von zungenförmigen Vorsprüngen 7 des Körpers 2 umgeben sein, wobei die Dicke der zungenförmigen Vorsprünge 7 etwa gleich dem Außendurchmesser des Schlauches 1 ist. Entsprechendes ist auch jeweils für ein Teilstück der Enden 4 des Schlauches 1 möglich.

Der Meßwertaufnehmer wird auf die Oberfläche des zu untersuchenden Objekts in bekannter Weise aufgeklebt. Hierbei ist ein Kleber auszuwählen, der eine einwandfreie Übertragung der Oberflächendehnung des Objekts auf den Körper 2 und damit auf den Schlauch 1 gewährleistet.

Die Anwendung des hier vorgeschlagenen Meßwertaufnehmers ist nicht auf die Untersuchung der Verformungen von Reifen beschränkt; vielmehr kann dieser überall dort eingesetzt werden, wo hohe örtliche Oberflächendehnungen zu erfassen sind.

**Ansprüche**

1.  Meßwertaufnehmer zur Erfassung hoher örtlicher Oberflächendehnungen mit einem mit Quecksilber (5) gefüllten Schlauch (1) aus dehnbarem Material und mit den Schlauch (1) an seinen beiden Enden verschließenden, sowie mit den Enden der Quecksilbersäule elektrisch leitend verbundenen Anschlußdrähten (6), wobei der Schlauch (1) schleifenförmig in einem hochelastischen Körper (2) allseitig eingebettet ist, **gekennzeichnet** durch die folgenden Merkmale:

    (a) Der Schlauch (1) ist in einem vorgedehnten Zustand in dem hochelastischen Körper (2) eingebettet,

    (b) die gebogenen Abschnitte (3) des Schlauches (1) sowie seine Enden (4) ragen aus dem Körper (2) heraus,

(c) die Anschlußdrähte (6) weisen gegenüber dem Innendurchmesser des Schlauches (1) ein Übermaß auf und sind an den im Schlauch (1) befindlichen Enden verrundet.

2. Meßwertaufnehmer nach Anspruch 1, dadurch **gekennzeichnet**, daß der den Schlauch (1) umgebende Körper (2) aus einem gießfähigen Material besteht und unter Verwendung einer Form um den vorgedehnten Schlauch (1) herumgegossen ist.

3. Meßwertaufnehmer nach Anspruch 1 oder 2, dadurch **gekennzeichnet**, daß die gebogenen Abschnitte (3) des Schlauches (1) von zungenförmigen Vorsprüngen (7) des Körpers (2) umgeben sind.

4. Meßwertaufnehmer nach Anspruch 3, dadurch **gekennzeichnet** , daß die Dicke der zungenförmigen Vorsprünge (7) gleich dem Außendurchmesser des Schlauchs (1) ist.

5. Meßwertaufnehmer nach einem der Ansprüche 1 bis 4, dadurch **gekennzeichnet**, daß der Schlauch (1) aus Silicon besteht.

6. Meßwertaufnehmer nach einem der Ansprüche 1 bis 5, dadurch **gekennzeichnet**, daß der Körper (2) aus Silicon-Kautschuk besteht.

7. Meßwertaufnehmer nach einem der Ansprüche 1 bis 6, dadurch **gekennzeichnet**, daß die Vordehnung des Schlauches (1) 20 % beträgt.

## Claims

1. A transducer for detecting high local surface expansion comprising a tube (1) made of flexible material and filled with mercury (5) and connecting wires (6), which seal the tube (1) at both ends and are connected in an electrically conductive manner with the ends of the mercury column, the tube (1) being embedded on all sides in the shape of a loop in a highly elastic element (2), characterised by the following features:
   (a) the tube (1) is embedded in a pre-expanded state in the highly elastic element (2),
   (b) the curved sections (3) of the tube (1) and its ends (4) project out of the element (2),
   (c) the connecting wires (6) are sized in excess relative to the internal diameter of the tube (1) and are rounded at the ends arranged in the tube (1).

2. A transducer according to claim 1, characterised in that the element (2) surrounding the tube (1) is made of a castable material and is cast around the pre-expanded tube (1) using mould.

3. A transducer according to claim 1 or 2, characterised in that the curved sections (3) of the tube (1) are surrounded by tongue-shaped projections (7) of the element (2).

4. A transducer according to claim 3, characterised in that the thickness of the tongue-shaped projections (7) is equal to the external diameter of the tube (1).

5. A transducer according to one of claims 1 to 4, characterised in that the tube (1) is made of silicon.

6. A transducer according to one of claims 1 to 5, characterised in that the element (2) is made of silicon rubber.

7. A transducer according to one of claims 1 to 6, characterised in that the degree of pre-expansion of the tube (1) is 20%.

## Revendications

1. Capteur de valeurs à mesurer pour capter de grandes extensions locales de surface, comportant un tuyau (1) en matériau extensible rempli de mercure (5), et des fils de raccordement (6) qui ferment le tuyau (1) à ses deux extrémités et sont électriquement reliés aux extrémités de la colonne de mercure, le tuyau (1) étant en forme de boucle(s) et noyé dans un corps très élastique (2), caractérisé par les caractéristiques suivantes:
   (a) le tuyau (1) étant en état d'extension préalable est noyé dans le corps très élastique (2),
   (b) les parties coudées (3) du tuyau (1) ainsi que ses extrémités (4) débordent du corps (2),
   (c) les fils de raccordement (6) présentent un supplément de dimension par rapport au diamètre intérieur du tuyau (1) et sont arrondis en leurs extrémités se trouvant dans le tuyau (1).

2. Capteur de valeurs à mesurer selon revendication 1, caractérisé par le fait que le corps (2) entourant le tuyau (1) est en un matériau pouvant être coulé et est coulé autour du tuyau (1) en extension préalable, en utilisant un moule.

3. Capteur de valeurs à mesurer selon revendication & ou 2, caractérisé par le fait que les parties coudées (3) du tuyau (1) sont entourées par des saillants (7) en forme de languettes du corps (2).

4. Capteur de valeurs à mesurer selon revendication 3, caractérisé par le fait que l'épaisseur des saillants en forme de languettes (7) est égale au diamètre extérieur du tuyau (1).

5. Capteur de valeurs à mesurer selon l'une des revendications 1 à 4, caractérisé par le fait que le tuyau (1) est en silicone.

6. Capteur de valeurs à mesurer selon l'une des revendications 1 à 5, caractérisé par le fait que le corps (2) est en caoutchouc silicone.

7. Capteur de valeurs à mesurer selon l'une des revendications 1 à 6, caractérisé par le fait que l'extension préalable du tuyau (1) vaut 20 % .

*Fig. 1*

*Fig. 2*